# EUROPÄISCHE PATENTSCHRIFT

(11) **EP 1 264 767 B1**
(45) Veröffentlichungstag und Bekanntmachung des Hinweises auf die Patenterteilung: **15.09.2004**
(21) Anmeldenummer: 02012613.2
(22) Anmeldetag: 06.06.2002
(51) Int. Cl.: B64D 47/06, F21V 7/00

(54) **Leuchte für Luftfahrzeuge**
Aircraft light
Dispositif d'éclairage pour aéronefs

(30) Priorität: 06.06.2001 DE 10127305
(43) Veröffentlichungstag der Anmeldung: 11.12.2002
(73) Patentinhaber: Goodrich Hella Aerospace Lighting Systems GmbH, 59557 Lippstadt (DE)
(72) Erfinder: Schulz, Rico, 59558 Rixbeck (DE); Ganzer, Bernd, 59597 Erwitte (DE); Lüder, Sascha, 33397 Mastholte (DE)
(74) Vertreter: Hilleringmann, Jochen, Dipl.-Ing.

(56) Entgegenhaltungen:
- EP-A- 1 138 593
- GB-A- 2 337 645
- US-A- 2 058 977
- US-A- 2 960 679
- US-A- 5 931 569

## Beschreibung

Die Erfindung betrifft Leuchte für Luftfahrzeuge mit einem Gehäuse, enthaltend eine Lichtquelle und einen Reflektor, der aus dem von der Lichtquelle ausgesandten Licht ein Lichtbündel zur Erzeugung einer vorgegebenen Lichtverteilung bildet und mit einer das Gehäuse abschließenden Lichtscheibe.

Es ist üblich, Leuchten mit Glühlampen und einem Reflektor auszustatten, um beispielsweise als Positionslicht eine gewünschte Lichtstärkeverteilung zu erzeugen (z.B. DE-A-41 17 289) Bei Luftfahrzeugen ist es bekannt, dass für an exponierten Stellen des Luftfahrzeuges, wie beispielsweise an freien Enden des Flügels oder in einem hinteren Bereich des Fahrzeuges, angeordnete Leuchten unterschiedliche Lichtstärkeverteilungen in vertikaler und horizontaler Richtung vorgegeben sind. Aus den Werbeunterlagen der Firma Hella KG Hueck & Co. "HELLA Aircraft Equipment" ist eine Leuchte (Nr. 2LA 001 625-xx) bekannt, die eine vorgegebene horizontale Lichtstärkeverteilung in einem Bereich zwischen +/- 70° erfüllt. Die Leuchte weist ein Gehäuse auf, in dem als Lichtquelle eine Glühlampe koaxial zu dem Gehäuse angeordnet ist. Die Glühlampe ist in einem rotationssymmetrisch ausgebildeten Reflektor angeordnet, der das von der Glühlampe ausgesandte Licht nach der vorgegebenen Lichtverteilung reflektiert. Ein vorderer Rand des Gehäuses dient als Blendkante für das ausgesandte Lichtbündel. Nachteilig an der bekannten Leuchte ist, dass die Lichtstärke der Glühlampe relativ hoch ausgelegt sein muss, um die Anforderungen hinsichtlich der vorgegebenen Lichtstärkeverteilung zu erfüllen. Das hat zur Folge, dass die Mindestlichtstärke in einigen Teilen des vorgegebenen Leuchtenabstrahlraumwinkelbereichs bei weitem überschritten werden muss, damit die Lichtstärke in anderen Teilen des Leuchtenabstrahlraumwinkels noch gerade oberhalb der für diese Teile geltenden Mindestlichtstärke liegt.

Die Patentschrift US-A-2960679 offenbart eine Positionsleuchte für ein Luftfahrzeug mit zwei identischen Lichtguellen die das Licht innerhalb eines Lichtabstrahlraumwinkels mit einer Mittelachse aussen den.

Eine Aufgabe der vorliegenden Erfindung ist es, eine Leuchte für Luftfahrzeuge derart weiterzubilden, dass die Erzielung einer vorgegebenen Lichtstärkeverteilung mit einem erhöhten Wirkungsgrad gewährleistet ist.

Zur Lösung dieser Aufgabe wird mit der Erfindung eine Leuchte, insbesondere Positionsleuchte, für ein Luftfahrzeug, vorzugsweise zur Anbringung am hinteren Ende eines Luftfahrzeuges, wie z.B. eines Flugzeuges, vorgeschlagen, die versehen ist mit
- einem Leuchtmittel zur Abgabe von Licht,
- einer Reflektoranordnung und
- einem Gehäuse, das einen durch eine lichtdurchlässige Abdeckung verschlossenen Aufnahmeraum für das Leuchtmittel und die Reflektoranordnung aufweist, die derart ausgebildet sind, dass Licht mit einer längs einer Vorzugsachse geforderten Mindestintensität aus dem Gehäuse austritt.

Diese Leuchte ist erfindungsgemäß dadurch gekennzeichnet,
- dass das Leuchtmittel eine erste und eine zweite Lichtquelle aufweist, die im wesentlichen identisch sind und jeweils Licht innerhalb eines Lichtabstrahlraumwinkels mit einer Mittelachse aussenden,
- wobei die beiden Lichtquellen symmetrisch zur Vorzugsachse angeordnet und die Mittelachsen der Lichtabstrahlraumwinkel einander zugewandt geneigt sind, und
- dass die Reflektoranordnung eine erste und eine zweite, der ersten bzw. zweiten Lichtquelle jeweils zugeordnete Reflexionsfläche aufweist, die ebenfalls symmetrisch zur Vorzugsachse angeordnet und mit jeweils einer Lichtausbreitungsbegrenzungskante zur Begrenzung des Lichtausbreitungsbereichs versehen sind, innerhalb dessen direkt von der jeweils zugeordneten Lichtquelle ausgesandtes Licht aus dem Aufnahmeraum des Gehäuses austritt,
- wobei die erste Reflexionsfläche der ersten Lichtquelle gegenüberliegend und die zweite Reflexionsfläche der zweiten Lichtquelle gegenüberliegend angeordnet ist und die Lichtausbreitungsbegrenzungskante der ersten Reflexionsfläche der zweiten Lichtquelle abgewandt sowie die Lichtausbreitungsbegrenzungskante der zweiten Reflexionsfläche der ersten Lichtquelle abgewandt ist, und
- wobei die beiden Reflexionsflächen derart ausgerichtet und/oder ausgebildet sind, dass von der einen Lichtquelle ausgesandtes Licht von der ihr zugeordneten Reflexionsfläche an der Lichtausbreitungsbegrenzungskante der anderen Reflexionsfläche vorbei zur Erhöhung der Lichtintensität innerhalb des Lichtausbreitungsbereichs der anderen Lichtquelle nahe dem durch die Lichtausbreitungsbegrenzungskante der einen Reflexionsfläche definierten Teilbereich reflektiert wird.

Bei der erfindungsgemäßen Leuchte wird durch Verwendung von speziell angeordneten Reflexionsflächen (wie oben angegeben) erreicht, dass bei Verwendung einer möglichst geringen Anzahl an Lichtquellen die Anforderungen insbesondere bezüglich der Hell/Dunkel-Grenze von Lichtverteilungsfunktionen erfüllt werden können. Dies ist insbesondere möglich, wenn als Lichtquellen LED-Elemente oder LED-Module eingesetzt werden. Der Vorteil von LED-Elementen gegenüber konventionellen Glühlampen (mit Glühwendel oder als Blitzlichtröhre ausgeführt) ist darin zu sehen, dass LED-Elemente eine wesentlich höhere Lebensdauer haben. Außerdem sind LED-Elemente wesentlich störunempfindlicher. Ferner sind LED-Elemente in einem wesentlich geringeren und niedrigeren Spannungsbereich zu betreiben als konventionelle Glühlampen. Schließlich ist die Leistungsaufnahme von LED-Elemente wesentlich geringer als die bei Glühlampen. All dies führt zu nicht zu verachtenden Vorteilen in technischer und insbesondere auch in betriebswirtschaftlicher Hinsicht, weshalb die Flugzeugindustrie und Luftfahrtgesellschaften ein gesteigertes Interesse daran haben, im Außenbeleuchtungsbereich von Luftfahrzeugen LED-Technik einzusetzen.

Es sei an dieser Stelle jedoch hervorgehoben, dass die Erfindung nicht auf LED-Elemente als Lichtquellen beschränkt ist, sondern dass auch konventionelle Glühlampen als Lichtquellen bzw. Leuchtmittel eingesetzt werden können.

Ein gewisser Nachteil von LED-Elementen ist ihr lediglich begrenzter Abstrahlwinkelbereich von 120° bis 180° (je nach Ausführung). Dadurch wird es erforderlich, durch speziell angeordnete Reflexionsflächen dafür zu sorgen, dass trotz dieses relativ begrenzten Raumwinkel-Abstrahlungsbereichs die gesetzlichen oder internationalen Anforderungen in der Luftfahrt bezüglich horizontaler und vertikaler Lichtintensitätsverteilungen von Positionsleuchten an Flugzeugen erfüllt werden.

In vorteilhafter Weiterbildung der Erfindung ist vorgesehen, dass die Reflektoranordnung eine dritte und eine vierte, der ersten bzw. zweiten Lichtquelle jeweils zugeordnete Reflexionsfläche aufweist, die ebenfalls symmetrisch zur Vorzugsachse sowie in Draufsicht auf die Abdeckung in Richtung der Vorzugsachse betrachtet zwischen der ersten und der zweiten Reflexionsfläche angeordnet sind und die von der jeweils zugeordneten Lichtquelle ausgesandtes Licht im wesentlichen in Richtung der Vorzugsachse reflektieren.

Zweckmäßigerweise weist die Reflektoranordnung eine fünfte und eine sechste Reflexionsfläche auf, die ebenfalls symmetrisch zur Vorzugsachse und um 90° gegenüber der ersten und der zweiten Reflexionsfläche versetzt angeordnet sind, wobei die fünfte und die sechste Reflexionsfläche das von beiden Lichtquellen ausgesandte Licht innerhalb eines zur Vorzugsachse benachbarten ersten Raumwinkelbereichs reflektieren. Zweckmäßigerweise verbinden die fünften und sechsten Reflexionsflächen die ersten und die zweiten Reflexionsflächen untereinander.

In vorteilhafter Weiterbildung der Erfindung ist ferner vorgesehen, dass die Reflektoranordnung vier siebte Reflexionsflächen aufweisen, die paarweise diametral gegenüberliegen sowie paarweise symmetrisch zur Vorzugsachse angeordnet sind, dass jeweils zwei siebte Reflexionsflächen einer Lichtquelle zugeordnet sind und dass die vier siebten Reflexionsflächen Licht der ihnen jeweils zugeordneten Lichtquellen innerhalb eines von der Vorzugsachse beabstandeten zweiten Raumwinkelbereichs reflektieren. Insbesondere befindet sich der erste Raumwinkelbereich zwischen der Vorzugsachse und dem zweiten Raumwinkelbereich.

Insbesondere sind die dritten und die vierten Reflexionsflächen sowie die vier siebten Reflexionsflächen als Teile der Oberfläche eines gemeinsamen ersten Reflektorkörpers ausgebildet, der in der Draufsicht auf die Abdeckung des Gehäuses in Richtung der Vorzugsachse betrachtet zwischen den beiden Lichtquellen angeordnet ist. Ebenso ist es von Vorteil wenn die erste, die zweite, die fünfte und die sechste Reflexionsfläche als ein zweiter ringförmiger Reflektorkörper ausgebildet sind, der in der Draufsicht auf die Abdeckung des Gehäuses in Richtung der Vorzugsachse betrachtet vor den beiden Lichtquellen angeordnet ist.

In vorteilhafter Weiterbildung der Erfindung ist ferner vorgesehen, dass in der Draufsicht auf die Abdeckung des Gehäuses in Richtung der Vorzugsachse betrachtet die Lichtquellen hinter dem zweiten Reflektorkörper und vor dem ersten Reflektorkörper angeordnet sind.

Vorzugsweise sind die Reflexionsflächen gekrümmt, insbesondere konkav gekrümmt ausgebildet.

In weiterer vorteilhafter Ausgestaltung der Erfindung ist vorgesehen, dass die beiden Lichtquellen jeweils als mindestens ein LED-Element aufweisende Lichtquellen ausgebildet sind, wobei jede Lichtquelle insbesondere als LED-Modul mit einer Vielzahl von matrix- bzw. gitterförmig angeordneten LED-Elementen ausgebildet ist.

Zweckmäßig ist es ferner, zur Ausleuchtung in Richtungen von 90° zur Vorzugsachse, wenn weitere Lichtquellen vorgesehen sind, die derart angeordnet sind, dass sie ihr Licht unter einem Winkel von im wesentlichen 90° zur Vorzugsachse aussenden, wobei diese weiteren Lichtquellen jeweils mindestens ein LED-Element aufweisen.

Für die Freund-Feind-Erkennung ist es zweckmäßig, wenn elektromagnetische Strahlung im nicht-sichtbaren Wellenlängenbereich aussendende zusätzliche Strahlungsquellen vorgesehen sind, die derart angeordnet sind, dass sie ihre Strahlung im wesentlichen in Richtung der Vorzugsachse abgeben, wobei diese Strahlungsquellen wahlweise zur pulsierenden, intermittierenden und/oder kontinuierlichen Abgabe von Strahlung ansteuerbar sind. Vorzugsweise sind diese zusätzlichen Strahlungsquellen als LED-Element, insbesondere als IR-LED-Element ausgebildet.

Wie sich aus dem Vorstehenden ergibt, besteht der Vorteil der erfindungsgemäßen Leuchte darin, dass durch die Ausbildung unterschiedlicher orientierter Reflexionsflächen das von der Lichtquelle ausgesandte Licht gezielt zur Herstellung einer vorgegebenen Lichtstärkeverteilung geführt werden kann. Die standardisierten lichttechnischen Erfordernisse können auf diese Weise mit einem relativ geringen Leistungsaufwand erfüllt werden. Grundgedanke der Erfindung ist es, durch unterschiedlich orientierte Reflexionsflächen eine gewünschte Mindestlichtstärkeverteilung in einem vorgegebenen Raumwinkelbereich zu erzielen, und zwar unter energetisch optimierten Bedingungen und insbesondere unter Verwendung von LEDs bzw. LED-Modulen. Dadurch, dass Reflexionsflächen in einer zur Hauptabstrahlrichtung (Vorzugsachse) der Leuchte quer versetzten Anordnung positioniert sind, kann ein großer Raumwinkelbereich der von der geneigt zur Hauptabstrahlrichtung angeordneten Lichtquelle ausgesandten Lichtstrahlen erfasst werden. Auf diese Weise ist eine Umlenkung des Lichtstrahles in einem großen Winkelbereich möglich, ohne dass die Reflexionsflächen eine unerwünschte abschattende Wirkung haben.

Nach einer besonderen Ausführungsform besteht der Reflektor aus einem ersten (inneren) und einem zweiten (äußeren) Reflektorkörper bzw. -segment, die jeweils eine Anzahl von unterschiedlich orientierten Reflexionsflächen aufweisen. Das äußere Reflektorsegment weist mindestens zwei Reflexionsflächen auf zur Erzeugung eines breiten Lichtverteilungsabschnittes mit relativ hoher Lichtstärke. Das innere Reflektorsegment weist kleinflächige Reflexionsflächen auf, die unabhängig von der Orientierung der Reflexionsflächen des äußeren Reflektorsegmentes ausgestaltet sein können. Das innere und äußere Reflektorsegment können entweder einstückig miteinander verbunden oder als getrennte Bauteile ausgebildet sein. Wesentlich ist, dass die Bauform der Reflexionsflächen des inneren Reflektorsegmentes einerseits und des äußeren Reflektorsegmentes andererseits unabhängig voneinander ausgestaltet sein können. Die einzige Bedingung besteht darin, dass die Reflexionsflächen des inneren Reflektorsegmentes nicht so weit abragen, dass sie die auf der zu der Lichtquelle abgewandten Seite des inneren Reflektorsegmentes angeordneten Reflektorsegmente des äußeren Reflektorsegmentes abschatten.

Alternativ können die Reflektorsegmente auch terrassenförmig in einem unterschiedlichen Abstand zu der Lichtquelle angeordnet sein, wobei die von der Lichtquelle weiter entfernten Reflektorsegmente einen in Hauptabstrahlrichtung der Leuchte höheren Aufbau aufweisen.

Nach einer Weiterbildung der Erfindung weist die Leuchte in einem spitzen Winkel zu der Hauptabstrahlrichtung derselben geneigt angeordnete Lichtquellen auf, wobei die Reflexionsflächen des äußeren Reflektorsegmentes jeweils zur Reflexion der von der ersten und der zweiten Lichtquelle ausgesandten Lichtstrahlen dient. Die Reflexionsflächen des inneren Reflektorsegmentes dienen jeweils nur zur Reflexion von Lichtstrahlen entweder der ersten Lichtquelle oder der zweiten Lichtquelle.

Nach einer Weiterbildung der Erfindung sind sowohl die Lichtquellen als auch die Reflexionsflächen des äußeren und inneren Reflektorsegmentes symmetrisch zu einer Mittelebene der Leuchte angeordnet. Auf diese Weise wird ein besonders einfacher Aufbau der Leuchte ermöglicht. Alternativ ist es auch möglich, mehr als zwei Lichtquellen, beispielsweise in einem Winkel von 120° oder 90° in Umfangsrichtung zu der Hauptabstrahlrichtung anzuordnen.

Durch das Vorsehen von mehreren Lichtquellen kann eine Redundanz geschaffen werden, die einen absoluten Betriebsausfall der Leuchte verhindert.

Nach einer bevorzugten Ausführungsform sind die Lichtquellen als LED-Module (Leuchtdioden-Module) ausgebildet, die jeweils eine Mehrzahl von auf einer Tragplatte gitterförmig angeordneter Leuchtdioden aufweisen. Durch den Einsatz von Leuchtdioden kann die Leistungsaufnahme verringert bzw. die Lebensdauer wesentlich vergrößert werden. Durch Ausfall der Leuchtdioden kann insbesondere ein Spektrum realisiert werden, das einen für den Betrieb eines Nachtsichtgerätes störenden Wellenlängenbereich ausspart. Das Vorsehen eines Filterglases entfällt und der Einsatz eines zusätzlichen Nachtsichtfilters ist damit nicht notwendig.

Nach einer Weiterbildung der Erfindung weist das innere Reflektorsegment mindestens eine Öffnung für den Durchtritt von Lichtstrahlen einer weiteren Strahlungsquelle, vorzugsweise einer Strahlung im unsichtbaren Wellenlängenbereich, z.B. einer Infrarotlichtquelle, auf. Die Infrarotlichtquelle ist mittels einer entsprechenden Ansteuerung dazu geeignet, optische Kennungsmuster zur Freund-Feind-Kennung für militärische Zwecke abzusenden.

Im Zusammenhang mit den beiden zuvor beschriebenen Varianten und deren Weiterbildungen wurde auf eine Vielzahl von Merkmalen und Merkmalskombinationen hingewiesen. Es sei an dieser Stelle angemerkt, dass die im Zusammenhang mit der einen Variante der Erfindung beschriebenen Merkmale auch bei der anderen Variante Verwendung finden können. Insofern umfasst die Erfindung sämtliche Kombinationen der zuvor beschriebenen Merkmale.

Die Erfindung wird nachfolgend anhand eines Ausführungsbeispiels unter Bezugnahme auf die Zeichnung näher erläutert. Im einzelnen zeigen dabei:
- Fig. 1: in Seitenansicht ein Flugzeug mit am hinteren Ende angeordneter Positionsleuchte und einem Diagramm, in dem die gestrichelte Linie eine geforderte (Mindest-)Lichtintensitätsverteilung in vertikaler Richtung und in durchgezogener Linie die tatsächlich gemessene vertikale Lichtverteilung der Positionsleuchte dargestellt ist,
- Fig. 2: eine Draufsicht auf das Flugzeug gemäß Fig. 1 mit am hinteren Ende angebrachter Positionsleuchte und ein Diagramm, in dem in gestrichelten Linien der zulässige Bereich für die horizontale Lichtverteilung und in durchgezogener Linie die horizontale Lichtverteilung der Positionsleuchte dargestellt ist,
- Fig. 3: eine Seitenansicht des Licht abstrahlenden Gehäuses der Positionsleuchte,
- Fig. 4: eine Draufsicht auf die Positionsleuchte im eingebauten Zustand, wobei die Konturen des Flugzeuges gestrichelt angedeutet sind,
- Fig. 5: eine Schnittansicht entlang der Linie V-V der Fig. 3,
- Fig. 6: eine perspektivische Darstellung des Licht aussendenden Endes der Positionsleuchte und
- Fig. 7: eine Querschnittsansicht durch einen Teil des Licht aussendenden Endes der Positionsleuchte zur Verdeutlichung des Verlaufs der für einen Teilbereich der horizontalen Lichtverteilung relevanten Lichtstrahlen.

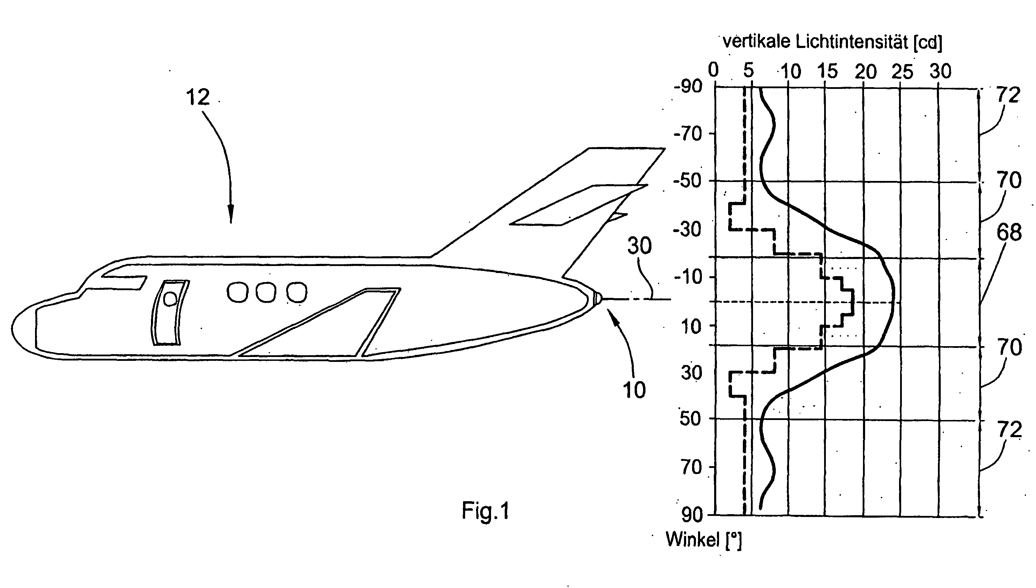

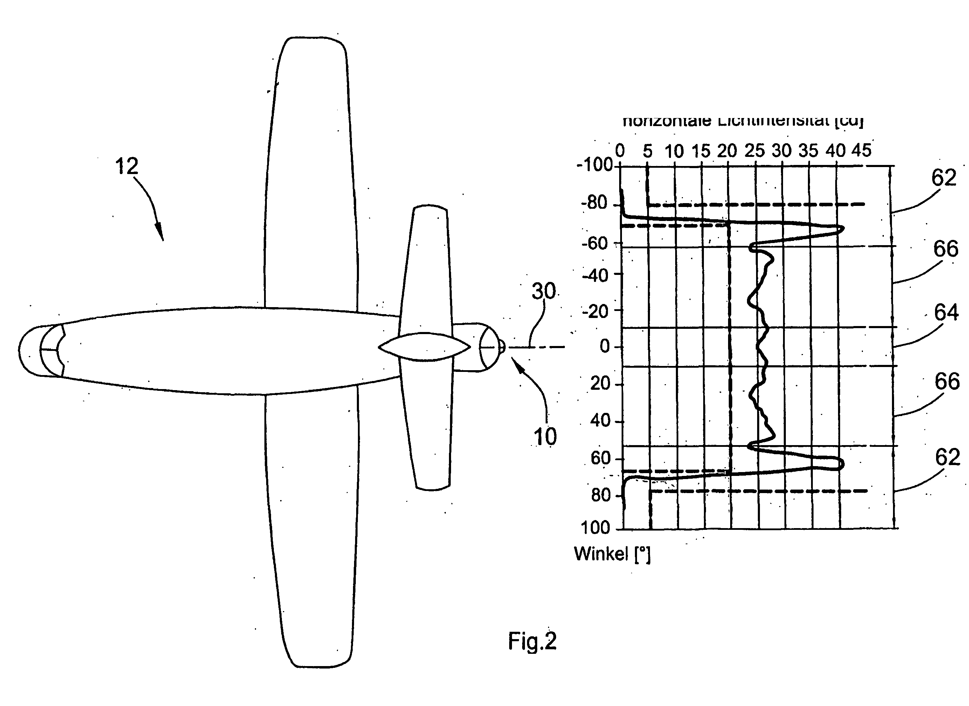

In den Fign. 1 und 2 sind zur Verdeutlichung der Anordnung einer Positionsleuchte 10 gemäß der Erfindung eine Seitenansicht und eine Draufsicht auf ein Flugzeug 12 dargestellt. Ferner sind in diesen Figuren Diagramme für die vertikale (Fig. 1) und für die horizontale (Fig. 2) Verteilung des von der Positionsleuchte 10 ausgesendeten Lichts dargestellt. In diesen Diagrammen sind mit gestrichelten Linien diejenigen Bereiche angegeben, oberhalb derer bzw. innerhalb derer sich gemäß einer hier beispielhaft herangezogenen internationalen Standardisierung und Vorgabe die vertikalen und horizontalen Lichtverteilungen befinden müssen. Beispielsweise besagt also die Vorgabe, dass die von der Positionsleuchte 10 unter einem Winkel von 50° in vertikaler Erstreckung eine Lichtintensität von etwa 4 Candela aufweisen muss und beispielsweise in einem Winkel von 80° in horizontaler Erstreckung maximal noch 5 Candela aufweisen darf (in jeweils vorgegebenen Abständen). In gestrichelten Linien ist in den Diagrammen der Fign. 1 und 2 dann die tatsächlich gemessene Lichtintensitätsverteilung der Positionsleuchte 10 wiedergegeben.

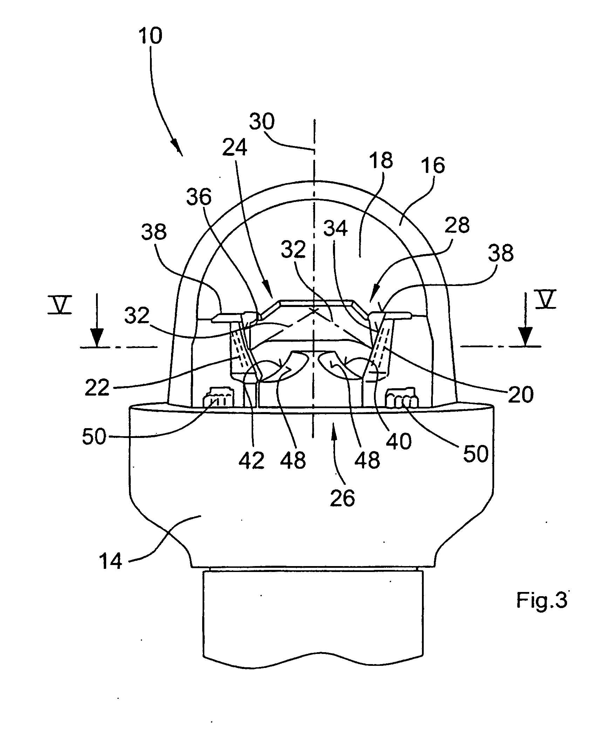

Der genauere Aufbau der Positionsleuchte 10 und deren Anordnung bzw. Ausrichtung relativ zum Flugzeug 12 ist in den Fign. 3 bis 6 dargestellt. Gemäß diesen Figuren weist die Positionsleuchte 10 ein Gehäuse 14 auf, von dem in den Figuren nur ein Teil dargestellt ist. Auf das dargestellte Ende des Gehäuses 14 ist eine transparente kuppelartige Abdeckung 16 aufgesetzt, die einen Aufnahmeraum 18 definiert. In diesem Aufnahmeraum 18 sind zwei LED-Module 20,22 und eine Reflektoranordnung 24 untergebracht, die in diesem Ausführungsbeispiel zwei voneinander getrennte Reflektorkörper 26,28 aufweist. Selbstverständlich können auch weniger oder mehr Reflektorkörper vorgesehen sein. Entscheidend für die Erfindung ist die Anordnung der Reflexionsflächen der Reflektoranordnung 24, auf die im folgenden noch näher eingegangen wird.

Wie anhand der horizontalen und vertikalen Lichtverteilungskurven gemäß den Fign. 1 und 2 zu erkennen ist, verlangen die Vorgaben, dass unter einem Winkel von 0° sowohl in vertikaler als auch in horizontaler Erstreckung, d.h. unter einem Höhen- und einem Seitenwinkel von 0° die jeweiligen Mindestanforderungen maximal sind. Die 0°-Achse, bei der es sich um die Verlängerung der Längsachse des Flugzeuges 12 handelt, wird im folgenden auch als Vorzugsachse 30 bezeichnet.

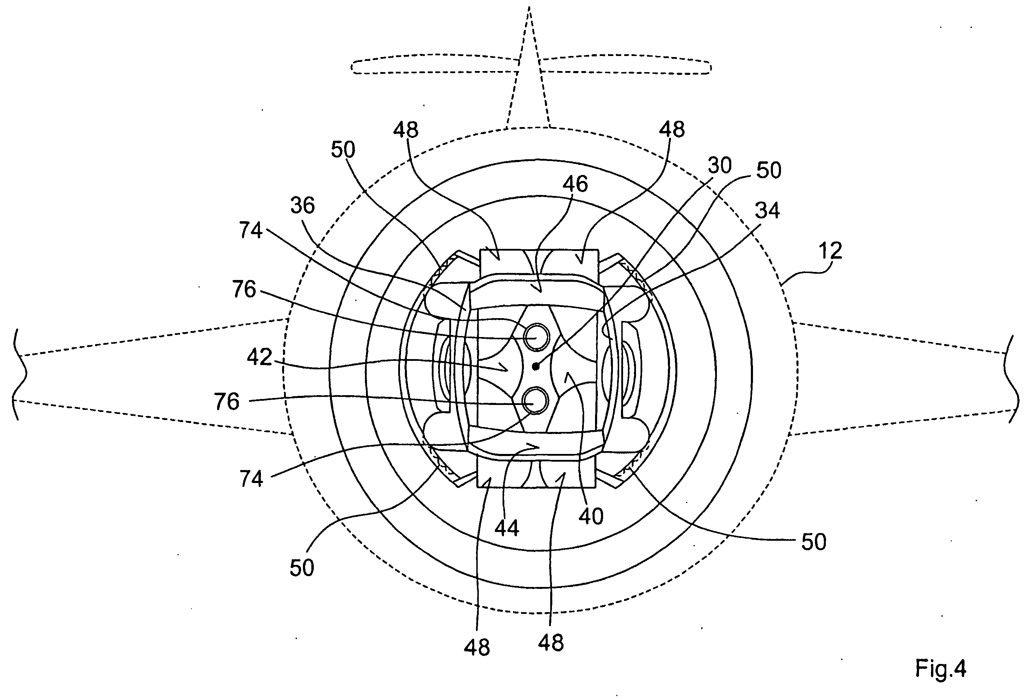

Relativ zu dieser Vorzugsachse 30 sind nun die einzelnen für die Lichtverteilung entscheidenden optischen Elemente, nämlich die LED-Module 20,22 und die Reflektoranordnung 24, im Aufnahmeraum 18 positioniert. So sind die beiden LED-Module 20,22 geneigt zur Vorzugsachse 30 ausgebildet, und zwar dergestalt, dass ihre Normalen 32 die Vorzugsachse 30 kreuzen. Damit sind die beiden LED-Module 20,22 punktsymmetrisch zur Vorzugsachse 30 angeordnet. Aus Fig. 4 ist zu erkennen, dass die beiden LED-Module 20,22 entlang der Horizontalerstreckung angeordnet sind.

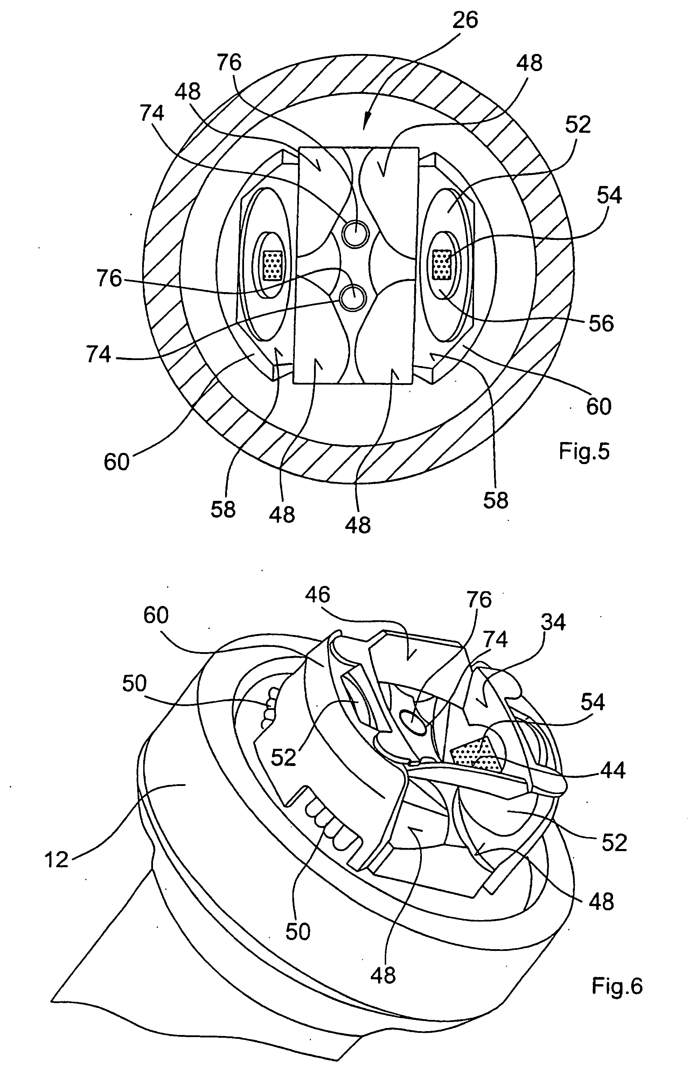

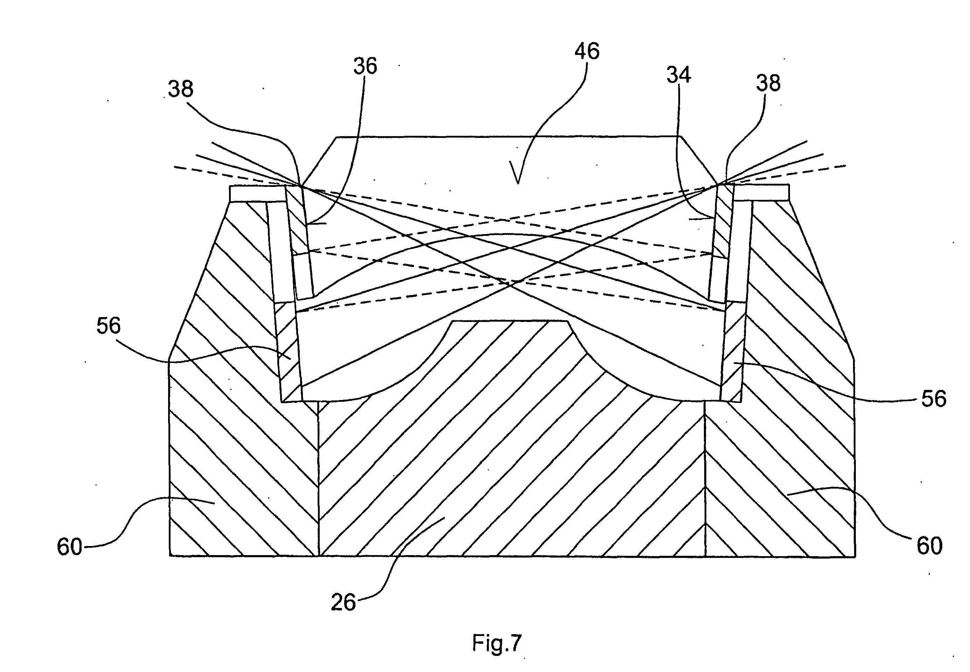

Zwischen den beiden LED-Modulen 20,22 befinden sich der erste Reflektorkörper 26, der gemäß Fig. 5 eine Vielzahl von unterschiedlichen Reflexionsflächen aufweist. Auf diese Reflexionsflächen wird später noch eingegangen werden. Oberhalb der LED-Module 20,22 befindet sich der andere Reflektorkörper 28, der nach Art einer Ringstruktur ausgebildet ist und erste und zweite jeweils oberhalb und benachbart zu den LED-Modulen 20,22 angeordnete Reflexionsflächen 34,36 aufweist. Diese Reflexionsflächen 34,36 enden in Ausbreitungsrichtung des Lichts der Positionsleuchte 10 an Lichtausbreitungsbegrenzungskanten 38, die bezogen auf die horizontale Lichtverteilung gemäß Fig. 2 bei etwa 70° Seitenwinkel die geforderte Hell/Dunkel-Grenze erzeugen. Dies ist auch in Fig. 7 dargestellt. Zu erkennen ist, dass die Kanten 38 das von dem jeweils gegenüberliegenden LED-Modul 20,22 direkt ausgesandte Licht abblocken, und zwar oberhalb etwa 70° Seitenwinkel. Da die Lichtausbeute im Bereich von 70° der LED-Module 20,22 jedoch nicht ausreichend ist, um die geforderte Mindestintensität zu erreichen, muss in diesem Raumwinkelbereich zusätzlich Licht zur Verfügung gestellt werden. Dies erfolgt dadurch, dass Licht von beispielsweise dem (zweiten) LED-Modul 22 von der diesem LED-Modul 22 gegenüberliegenden Reflexionsfläche 34 reflektiert wird, wobei dieses reflektierte Licht an der Lichtausbreitungsbegrenzungskante 38 der Reflexionsfläche 36 vorbei strahlt. Auf diese Weise wird also innerhalb der durch die Lichtausbreitungsbegrenzungskanten 38 definierten Raumwinkelbereiche die Lichtintensität verstärkt. Da diese Raumwinkelbereiche einem Seitenwinkel von etwa 70° entsprechen, lässt sich also hier die Hell/Dunkel-Forderung erfüllen, und zwar auch dann, wenn jedes einzelne LED-Modul 20,22 für sich selbst dies nicht leisten kann.

Wie man aus den Darstellungen entnehmen kann, liegen also auch die beiden Reflexionsflächen 34,36 punktsymmetrisch zur Vorzugsachse 30, wobei auch diese beiden Reflexionsflächen 34,36 in Horizontalerstreckung aufeinander folgen.

Eine dritte bzw. eine vierte Reflexionsfläche 40,42 ist schließlich am ersten Reflektorkörper 26 ausgebildet. Diese beiden Reflexionsflächen 40,42 sind unmittelbar benachbart zu den ihnen jeweils zugeordneten LED-Modulen 20 bzw. 22 angeordnet und sorgen für eine Reflexion des von diesen beiden LED-Modulen ausgesendeten Lichts in im wesentlichen der Richtung der Vorzugsachse 30.

Ferner weist der Reflektorkörper 28 fünfte und sechste Reflexionsflächen 44,46 auf, die ebenfalls punktsymmetrisch zur Vorzugsachse 30 angeordnet sind, einander gegenüberliegen und um 90° gegenüber den ersten und zweiten Reflexionsflächen 34,36 verdreht angeordnet sind. Diese fünften und sechsten Reflexionsflächen 44,46 reflektieren von beiden LED-Modulen 20,22 ausgesendetes Licht innerhalb eines Raumwinkelbereichs, der dicht um die Vorzugsachse 30 herum angeordnet ist, um insbesondere den Mindestintensitätsanforderungen der vertikalen Lichtintensitätsverteilung im Bereich zwischen etwa 10° und 70° zu genügen.

Schließlich weist der (erste) Reflektorkörper 26 vier siebte Reflexionsflächen 48 auf, die punktsymmetrisch zur Vorzugsachse 30 angeordnet sind. Diese vier siebten Reflexionsflächen 48 erstrecken sich zumindest teilweise bis unterhalb der fünften und sechsten Reflexionsflächen 44,46 und sorgen insbesondere dafür, dass bezogen auf die vertikale Lichtverteilung die in den Bereichen nahe 90° geltenden Anforderungen an die Mindeststärke erfüllt werden. Daher sind diese vier Reflexionsflächen 48 auch in vertikaler Richtung erstreckend angeordnet bzw. so gekrümmt und angeordnet, dass ausreichend Licht nahe 90° in vertikaler Richtung noch abgestrahlt werden kann. Sofern dieses Licht letztendlich dann doch nicht ausreichend sein sollte, sind zusätzliche LED-Elemente 50 vorgesehen. Diese Elemente 50 sind zu vier Gruppen angeordnete, wobei die Gruppen diametral gegenüberliegend angeordnet sind. Jede Gruppe kann dabei ein oder mehrere LED-Elemente 50 aufweisen. Diese LED-Elemente 50 strahlen Licht im wesentlichen unter 90° in vertikaler Richtung ab (bezogen auf die vertikale Lichtintensitätsverteilung).

Bei den LED-Modulen 20,22 handelt es sich, wie insbesondere anhand der Fign. 5 und 6 zu erkennen ist, um Trägerplatten 52, auf denen eine Vielzahl von in Reihen und Spalten angeordnete Einzel-LED-Elemente 54 angeordnet sind. Das Array von Einzel-LED-Elementen 54 ist von einer Vergussmasse 56 überzogen, die optische Funktion aufweisen kann, jedoch nicht muss. Jede Trägerplatte 52 ist an einer Schrägfläche 58 eines Halteelements 60 angeordnet, wobei beide Halteelemente 60 beidseitig und an gegenüberliegenden Seiten des ersten Reflektorkörpers 26 angeordnet sind.

Mit der hier beschriebenen Reflexionsflächenanordnung gelingt es, bei Verwendung lediglich zweier LED-Module, die ihr Licht anders als Glühlampen lediglich in einem begrenzten Raumwinkelbereich von etwa 140° bis 170° abgeben, eine Lichtintensitätsverteilung in horizontaler und vertikaler Richtung zu garantieren, die den gesetzlichen bzw. internationalen Bestimmungen, die in diesem Ausführungsbeispiel angenommen wurden, genügt. Für die Lichtintensitätsverteilungen in den Bereichen 62 der horizontalen Lichtintensitätsverteilung (siehe Fig. 2) sind dabei die ersten und zweiten Reflexionsflächen 34,36 mit ihren Lichtausbreitungsbegrenzungskanten 38 verantwortlich, die in diesem Ausführungsbeispiel zu einer Überhöhung der Lichtintensität an der geforderten Hell/Dunkel-Grenze bei etwa 70° Seitenwinkel führen. Innerhalb des Bereichs 64 der horizontalen Lichtintensitätsverteilung wird das Licht ganz überwiegend über die dritten und vierten Reflexionsflächen 40,42 eingespeist. Verantwortlich für die Lichtintensität in den Bereichen 66 der horizontalen Lichtintensitätsverteilung sind in erster Linie die fünften und sechsten Reflexionsflächen 44,46.

Bezogen auf die vertikale Lichtintensitätsverteilung gilt, dass im zentralen Bereich 68 (siehe Fig. 1) die Lichtintensität durch die dritten und vierten Reflexionsflächen 40,42 hervorgerufen wird, da diese Reflexionsflächen 40,42 wie im Falle der horizontalen Lichtintensitätsverteilung Licht im wesentlichen in Richtung der Vorzugsachse 30 reflektieren. Der wesentliche Beitrag für die Lichtverteilung in den zum zentralen Bereich 68 benachbarten Bereichen 70 der vertikalen Lichtintensitätsverteilung wird geleistet von den fünften und sechsten Reflexionsflächen 44,46, während in die Bereiche 72 der vertikalen Lichtintensitätsverteilung Licht in erster Linie über die vier siebten Reflexionsflächen 48 reflektiert wird.

Für die Freund-Feind-Erkennung bei der Verwendung der Positionsleuchte 10 für militärische Luftfahrzeuge sind im ersten Reflektorkörper 26 zwei Bohrungen 74 ausgebildet, in denen jeweils eine IR-Lichtquelle 76 in Form einer LED oder auch in anderer Technologie ausgeführt angeordnet sind. Diese Lichtquellen senden elektromagnetische Strahlung im nicht sichtbaren Wellenlängenbereich aus, die dann wiederum mit Nachtsichtgeräten geortet werden kann. Die Abstrahlrichtung der in diesem Fall als IR-Quellen 76 ausgebildeten Lichtquellen für Strahlung im nicht sichtbaren Wellenlängenbereich strahlen im wesentlichen in Richtung der Vorzugsachse 30.

## Patentansprüche

1. Leuchte, insbesondere Positionsleuchte, für ein Luftfahrzeug, vorzugsweise zur Anbringung am hinteren Ende eines Luftfahrzeuges, wie z.B. eines Flugzeuges, mit
- einem Leuchtmittel (20,22) zur Abgabe von Licht,
- einer Reflektoranordnung (24) und
- einem Gehäuse (14), das einen durch eine lichtdurchlässige Abdeckung (16) verschlossenen Aufnahmeraum (18) für das Leuchtmittel (20,22) und die Reflektoranordnung (24) aufweist, die derart ausgebildet sind, dass Licht mit einer längs einer Vorzugsachse (30) maximalen Intensität aus dem Gehäuse (14) austritt,
- einem Leuchtmittel, dass eine erste und eine zweite Lichtquelle (20,22) aufweist, die im wesentlichen identisch sind und jeweils Licht innerhalb eines Lichtabstrahlraumwinkels mit einer Mittelachse (32) aussenden,
**dadurch gekennzeichnet,**
- **dass** die beiden Lichtquellen (20,22) symmetrisch zur Vorzugsachse (30) angeordnet und die Mittelachsen (32) der Lichtabstrahlraumwinkel einander zugewandt geneigt sind, und
- dass die Reflektoranordnung (24) eine erste und eine zweite, der ersten bzw. zweiten Lichtquelle (20,22) jeweils zugeordnete Reflexionsfläche (34,36) aufweist, die ebenfalls symmetrisch zur Vorzugsachse (30) angeordnet und mit jeweils einer Lichtausbreitungsbegrenzungskante (38) zur Begrenzung des Lichtausbreitungsbereichs versehen sind, innerhalb dessen direkt von der jeweils zugeordneten Lichtquelle (20,22) ausgesandtes Licht aus dem Aufnahmeraum (18) des Gehäuses (14) austritt,
- wobei die erste Reflexionsfläche (34) der ersten Lichtquelle (20) gegenüberliegend und die zweite Reflexionsfläche (36) der zweiten Lichtquelle (22) gegenüberliegend angeordnet ist und die Lichtausbreitungsbegrenzungskante (38) der ersten Reflexionsfläche (34) der zweiten Lichtquelle (22) abgewandt sowie die Lichtausbreitungsbegrenzungskante (38) der zweiten Reflexionsfläche (36) der ersten Lichtquelle (20) abgewandt ist, und
- wobei die beiden Reflexionsflächen (34,36) derart ausgerichtet und/oder ausgebildet sind, dass von der einen Lichtquelle (20,22) ausgesandtes Licht von der ihr zugeordneten Reflexionsfläche (34,36) an der Lichtausbreitungsbegrenzungskante (38) der anderen Reflexionsfläche (34,36) vorbei zur Erhöhung der Lichtintensität innerhalb des Lichtausbreitungsbereichs der anderen Lichtquelle (20,22) nahe dem durch die Lichtausbreitungsbegrenzungskante (38) der einen Reflexionsfläche (34,36) definierten Teilbereich reflektiert wird.

2. Leuchte nach Anspruch 1, **dadurch gekennzeichnet, dass** die Reflektoranordnung (24) eine dritte und eine vierte, der ersten bzw. zweiten Lichtquelle (20,22) jeweils zugeordnete Reflexionsfläche (40,42) aufweist, die ebenfalls symmetrisch zur Vorzugsachse (30) sowie in Draufsicht auf die Abdeckung (16) in Richtung der Vorzugsachse (30) betrachtet zwischen der ersten und der zweiten Reflexionsfläche (34,36) angeordnet sind und die von der jeweils zugeordneten Lichtquelle (20,22) ausgesandtes Licht im wesentlichen in Richtung der Vorzugsachse (30) reflektieren.

3. Leuchte nach Anspruch 1 oder 2, **dadurch gekennzeichnet, dass** die Reflektoranordnung (24) eine fünfte und eine sechste Reflexionsfläche (44,46) aufweist, die ebenfalls symmetrisch zur Vorzugsachse (30) und um 90° gegenüber der ersten und der zweiten Reflexionsfläche (34,36) versetzt angeordnet sind, und dass die fünfte und die sechste Reflexionsfläche (44,46) das von beiden Lichtquellen (20,22) ausgesandte Licht innerhalb eines zur Vorzugsachse (30) benachbarten ersten Raumwinkelbereichs (66,70) reflektieren.

4. Leuchte nach Anspruch 3, **dadurch gekennzeichnet, dass** die fünften und sechsten Reflexionsflächen (44,46) die ersten und die zweiten Reflexionsflächen (34,36) untereinander verbinden.

5. Leuchte nach einem der Ansprüche 1 bis 4, **dadurch gekennzeichnet, dass** die Reflektoranordnung (24) vier siebte Reflexionsflächen (48) aufweisen, die paarweise diametral gegenüberliegen sowie paarweise symmetrisch zur Vorzugsachse (30) angeordnet sind, dass jeweils zwei siebte Reflexionsflächen (48) einer Lichtquelle (20,22) zugeordnet sind und dass die vier siebten Reflexionsflächen (48) Licht der ihnen jeweils zugeordneten Lichtquellen (20,22) innerhalb eines von der Vorzugsachse (30) beabstandeten zweiten Raumwinkelbereichs (72) reflektieren.

6. Leuchte nach Anspruch 3 und 5 oder 3, 4 und 5, **dadurch gekennzeichnet, dass** sich der erste Raumwinkelbereich (66,70) zwischen der Vorzugsachse (30) und dem zweiten Raumwinkelbereich (72) befindet.

7. Leuchte nach Anspruch 2, 4 und 5 oder einem bzw. mehreren vorhergehenden, sich auf die Ansprüche 2, 4, und 5 rückbeziehenden Ansprüchen, **dadurch gekennzeichnet, dass** die dritten und die vierten Reflexionsflächen (40,42) sowie die vier siebten Reflexionsflächen (48) als Teile der Oberfläche eines gemeinsamen ersten Reflektorkörpers (26) ausgebildet sind, der in der Draufsicht auf die Abdeckung (16) des Gehä^{u}ses (14) in Richtung der Vorzugsachse (30) betrachtet zwischen den beiden Lichtquellen (20,22) angeordnet ist.

8. Leuchte nach Anspruch 1 und 3 oder einem bzw. mehreren vorhergehenden sich auf die Ansprüche 1 und 3 rückbeziehenden Ansprüche, **dadurch gekennzeichnet, dass** die erste, die zweite, die fünfte und die sechste Reflexionsfläche (34,36,44,46) als ein zweiter ringförmiger Reflektorkörper (28) ausgebildet sind, der in der Draufsicht auf die Abdeckung (16) des Gehäuses (14) in Richtung der Vorzugsachse (30) betrachtet vor den beiden Lichtquellen (20,22) angeordnet ist.

9. Leuchte nach Anspruch 7 und 8, **dadurch gekennzeichnet, dass** in der Draufsicht auf die Abdeckung (16) des Gehäuses (14) in Richtung der Vorzugsachse (30) betrachtet die Lichtquellen (20,22) hinter dem zweiten Reflektorkörper (28) und vor dem ersten Reflektorkörper (26) angeordnet sind.

10. Leuchte nach einem der Ansprüche 1 bis 9, **dadurch gekennzeichnet, dass** jede Reflexionsfläche (34,36,40,42,44,46,48) gekrümmt, insbesondere konkav gekrümmt ausgebildet ist.

11. Leuchte nach einem der Ansprüche 1 bis 10, **dadurch gekennzeichnet, dass** die beiden Lichtquellen (20,22) jeweils als mindestens ein LED-Element aufweisende Lichtquellen ausgebildet sind.

12. Leuchte nach Anspruch 11, **dadurch gekennzeichnet, dass** jede Lichtquelle (20,22) als LED-Modul mit einer Vielzahl von matrix- bzw. gitterförmig angeordneten LED-Elementen (54) ausgebildet ist.

13. Leuchte nach einem der Ansprüche 1 bis 12, **gekennzeichnet durch** weitere Lichtquellen (50), die derart angeordnet sind, dass sie ihr Licht unter einem Winkel von im wesentlichen 90° zur Vorzugsachse (30) aussenden.

14. Leuchte nach Anspruch 13, **dadurch gekennzeichnet, dass** die weiteren Lichtquellen (50) jeweils mindestens ein LED-Element aufweisen.

15. Leuchte nach einem der Ansprüche 1 bis 14, **gekennzeichnet durch** elektromagnetische Strahlung im nicht-sichtbaren Wellenlängenbereich aussendende zusätzliche Strahlungsquellen (76), die derart angeordnet sind, dass sie ihre Strahlung im wesentlichen in Richtung der Vorzugsachse (30) abgeben, wobei diese Strahlungsquellen (76) wahlweise zur pulsierenden, intermittierenden und/oder kontinuierlichen Abgabe von Strahlung ansteuerbar sind.

16. Leuchte nach Anspruch 15, **dadurch gekennzeichnet, dass** jede zusätiliche Strahlungsquelle (76) als LED-Element, insbesondere als IR-LED-Element ausgebildet ist.

## Claims

1. A light, particularly a position light, for an aircraft, preferably for being mounted to the rear end of an aircraft, such as, e.g., an airplane, comprising
- a luminous means (20, 22) for emitting light,
- a reflector arrangement (24), and
- a housing (14) comprising a receiving room (18) for the luminous means (20, 22) and the reflector arrangement (24) locked by a transparent cover (16), which are configured such that light with a maximum intensity along a preferential axis (30) emerges from the housing (14),
- a luminous means comprising a first and a second light source (20,22) which are substantially identical and respectively emit light within a light radiation solid angle with a central axis (32),
**characterized in**
- **that** the two light sources (20, 22) are arranged symmetrically to the preferential axis (30) and the central axes (32) of the light radiation solid angle are inclined so as to face each other, and
- **that** the reflector arrangement (24) comprises a first and a second reflection surface (34, 36) allocated to the first and second light source (20, 22), respectively, said reflection surfaces also being symmetrically arranged to the preferential axis (30) and respectively provided with a light propagation limiting edge (38) for limiting the light propagation range, within which light emitted directly by the respectively allocated light source (20, 22) emerges from the receiving room (18) of the housing (14),
- the first reflection surface (34) being arranged opposite to the first light source (20) and the second reflection surface (36) being arranged opposite to the second light source (22) and the light propagation limiting edge (38) of the first reflection surface (34) facing away from the second light source (22) and the light propagation limiting edge (38) of the second reflection surface (36) facing away from the first light source (20), and
- the two reflection surfaces (34, 36) being oriented and/or configured such that light emitted by the one light source (20, 22) is reflected by the reflection surface (34, 36) allocated thereto past the light propagation limiting edge (38) of the other reflection surface (34, 36) to increase the luminous intensity within the light propagation range of the other light source (20, 22) near the partial range defined by the light propagation limiting edge (38) of the one reflection surface (34, 36).

2. The light according to claim 1, **characterized in that** the reflector arrangement (24) comprises a third and a fourth reflection surface (40, 42) which are allocated to the first and second light source (20, 22), respectively, and also arranged symmetrically to the preferential axis (30) and between the first and the second reflection surface (34, 36) when seen in top view of the cover (16) in the direction of the preferential axis (30) and reflect the light emitted by the respectively allocated light source (20, 22) substantially in the direction of the preferential axis (30).

3. The light according to claim 1 or 2, **characterized in that** the reflector arrangement (24) comprises a fifth and a sixth reflection surface (44, 46) also arranged symmetrically to the preferential axis (30) and offset by 90° with respect to the first and the second reflection surface (34, 36), and that the fifth and the sixth reflection surface (44, 46) reflect the light emitted by both light sources (20, 22) within a first solid angle range (66, 70) adjacent to the preferential axis (30).

4. The light according to claim 3, **characterized in that** the fifth and sixth reflection surfaces (44, 46) interconnect the first and second reflection surfaces (34, 36).

5. The light according to one of claims 1 to 4, **characterized in that** the reflector arrangement (24) comprises four seventh reflection surfaces (48) which are diametrically opposed to each other in pairs and are arranged symmetrically to the preferential axis (30) in pairs, that two seventh reflection surfaces (48) are respectively allocated to one light source (20, 22), and that the four seventh reflection surfaces (48) reflect light of the light sources (20, 22) respectively allocated thereto within a second solid angle range (72) spaced from the preferential axis (30).

6. The light according to claim 3 and 5 or 3, 4 and 5, **characterized in that** the first solid angle range (66, 70) is located between the preferential axis (30) and the second solid angle range (72).

7. The light according to claim 2, 4 and 5 or one or several of the preceding claims referring back to claims 2, 4 and 5, **characterized in that** the third and fourth reflection surfaces (40, 42) as well as the four seventh reflection surfaces (48) are configured as parts of the surface of a common first reflector body (26), which, in top view of the cover (16) of the housing (14), viewed in the direction of the preferential axis (30), is arranged between the two light sources (20, 22).

8. The light according to claim 1 and 3 or one or several of the preceding claims referring back to claims 1 and 3, **characterized in that** the first, the second, the fifth and the sixth reflection surface (34, 36, 44, 46) are configured as a second annular reflector body (28), which, in top view of the cover (16) of the housing (14), viewed in the direction of the preferential axis (30), is arranged in front of the two light sources (20, 22).

9. The light according to claim 7 and 8, **characterized in that** in top view of the cover (16) of the housing (14), viewed in the direction of the preferential axis (30), the light sources (20, 22) are arranged behind the second reflector body (28) and in front of the first reflector body (26).

10. The light according to one of claims 1 to 9, **characterized in that** each reflection surface (34, 36, 40, 42, 44, 46, 48) has a curved, particularly concavely curved configuration.

11. The light according to one of claims 1 to 10, **characterized in that** each of the two light sources is configured as a light source comprising at least one LED element.

12. The light according to claim 11, **characterized in that** each light source (20, 22) is configured as an LED module with a plurality of LED elements (54) arranged in the form of a matrix or a lattice.

13. The light according to one of claims 1 to 12, **characterized by** further light sources (50) arranged in such a manner that they emit their light under an angle of substantially 90° to the preferential axis (30).

14. The light according to claim 13, **characterized in that** the further light sources (50) comprise at least one LED element each.

15. The light according to one of claims 1 to 14, **characterized by** additional radiation sources (76) emitting electromagnetic radiation in the non-visible wavelength range and being arranged in such a manner that they emit their radiation substantially in the direction of the preferential axis (30), these radiation sources (76) being adapted to be optionally driven to supply the radiation pulsatingly, intermittently and/or continuously.

16. The light according to claim 15, **characterized in that** each additional radiation source (76) is configured as LED element, particularly as IR-LED element.

## Revendications

1. Feu, notamment feu de position, pour un aéronef, en particulier destiné à être monté à l'extrémité arrière d'un aéronef, tel que par exemple un avion, comprenant
- un moyen lumineux (20, 22) pour émettre de la lumière,
- un agencement de réflecteur (24), et
- un carter (14) qui présente un espace de logement (18) qui est fermé par un recouvrement (16) transparent à la lumière et est destiné au moyen lumineux (20, 22) et à l'agencement de réflecteur (24), ces éléments étant conçus de façon à ce que la lumière émerge du carter (14) avec une intensité maximale le long d'un axe préférentiel (30),
- un moyen lumineux qui présente une première et une seconde source de lumière (20, 22) qui sont sensiblement identiques et qui émettent chacune de la lumière à l'intérieur d'un angle solide de rayonnement de lumière avec un axe central (32),
**caractérisé**
- **en ce que** les deux sources de lumière (20, 22) sont disposées de manière symétrique par rapport à l'axe préférentiel (30), et les axes centraux (32) des angles solides de rayonnement de lumière étant inclinés en étant dirigés l'un vers l'autre, et
- **en ce que** l'agencement de réflecteur (24) présente un premier et un second axe de réflexion (34, 36), qui sont associés respectivement à la première et à la seconde source de lumière (20, 22), sont également disposés symétriquement par rapport à l'axe préférentiel (30), et pourvus chacun d'un bord de limitation de la propagation de la lumière (38) pour limiter la zone de propagation de la lumière à l'intérieur de laquelle de la lumière émise par la source de lumière (20, 22) respectivement associée émerge directement de l'espace de logement (18) du carter (14),
- la première surface de réflexion (34) étant disposée à l'opposé de la première source de lumière (20) et la seconde surface de réflexion (36) à l'opposé de la seconde source de lumière (22), et le bord de limitation de propagation de la lumière (38) de la première surface de réflexion (34) étant éloigné de la seconde source de lumière (22), et le bord de limitation de propagation de la lumière (38) de la seconde surface de réflexion (36) étant éloigné de la première source de lumière (20), et
- les deux surfaces de réflexion (34, 36) étant orientées et/ou conçues de façon telle, que de la lumière émise par une source de lumière (20, 22) soit réfléchie par la surface de réflexion (34, 36) qui lui est associée en passant au-devant du bord de limitation de propagation de la lumière (38) de l'autre surface de réflexion (34, 36) pour augmenter l'intensité de lumière à l'intérieur de la zone de propagation de l'autre source de lumière (20, 22) à proximité de la zone partielle définie par le bord de limitation de propagation de la lumière (38) de ladite une surface de réflexion (34, 36).

2. Feu selon la revendication 1, **caractérisé en ce que** l'agencement de réflecteur (24) présente une troisième et une quatrième surface de réflexion (40, 42) qui sont associées respectivement à la première et à la seconde source de lumière (20, 22), sont également disposées symétriquement par rapport à l'axe préférentiel (30) ainsi que, en vue de dessus sur le recouvrement (16), observé dans la direction de l'axe préférentiel (30), entre la première et la seconde surface de réflexion (34, 36), et réfléchissent la lumière émise par la source de lumière (20, 22) respectivement associée, sensiblement dans la direction de l'axe préférentiel (30).

3. Feu selon la revendication 1 ou 2, **caractérisé en ce que** l'agencement de réflecteur (24) présente une cinquième et une sixième surface de réflexion (44, 46) qui sont également disposées symétriquement par rapport à l'axe préférentiel (30) et décalées de 90° par rapport à la première et à la seconde surface de réflexion (34, 36), et **en ce que** la cinquième et une sixième surface de réflexion (44, 46) réfléchissent la lumière émise par les deux sources de lumière (20, 22) à l'intérieur d'une première zone d'angle solide (66, 70) voisine de l'axe préférentiel (30).

4. Feu selon la revendication 3, **caractérisé en ce que** les cinquième et sixième surfaces de réflexion (44, 46) relient mutuellement les première et seconde surface de réflexion (34, 36).

5. Feu selon l'une des revendications 1 à 4, **caractérisé en ce que** l'agencement de réflecteur (24) présente quatre septièmes surfaces de réflexion (48) qui sont diamétralement opposées par paire ainsi que disposées symétriquement par paire par rapport à l'axe préférentiel (30), **en ce que** respectivement deux septièmes surfaces de réflexion (48) sont associées à une source de lumière (20, 22), et **en ce que** les quatre septièmes surfaces de réflexion (48) réfléchissent de la lumière des sources de lumières (20, 22) qui leurs sont respectivement associées, à l'intérieur d'une seconde zone d'angle solide (72) espacée de l'axe préférentiel (30).

6. Feu selon la revendication 3 et 5 ou 3, 4 et 5, **caractérisé en ce que** la première zone d'angle solide (66, 70) se trouve entre l'axe préférentiel (30) et la seconde zone d'angle solide (72).

7. Feu selon la revendication 2, 4 et 5 ou l'une ou plusieurs revendications précédentes qui se rapportent aux revendications 2, 4 et 5, **caractérisé en ce que** les quatrième et cinquième surfaces de réflexion (40, 42) ainsi que les quatre septièmes surfaces de réflexion (48) sont réalisées en tant que parties de la surface d'un premier corps de réflecteur commun (26), qui en vue de dessus sur le recouvrement (16) du carter (14), observé dans la direction de l'axe préférentiel (30), est disposé entre les deux sources de lumière (20, 22).

8. Feu selon la revendication 1 et 3 ou l'une ou plusieurs revendications précédentes qui se rapportent aux revendications 1 et 3, **caractérisé en ce que** la première, la seconde, la cinquième et la sixième surface de réflexion (34, 36, 44, 46) sont réalisées en tant que second corps de réflecteur (28) de forme annulaire, qui en vue de dessus sur le recouvrement (16) du carter (14), observé dans la direction de l'axe préférentiel (30), est disposé devant les deux sources de lumière (20, 22).

9. Feu selon la revendication 7 et 8, **caractérisé en ce qu'**en vue de dessus sur le recouvrement (16) du carter (14), observé dans la direction de l'axe préférentiel (30), les sources de lumières (20, 22) sont disposées derrière le second corps de réflecteur (28) et devant le premier corps de réflecteur (26).

10. Feu selon l'une des revendications 1 à 9, **caractérisé en ce que** chaque surface de réflexion (34, 36, 40, 42, 44, 46, 48) est d'une configuration courbe, notamment d'une configuration courbe concave.

11. Feu selon l'une des revendications 1 à 10, **caractérisé en ce que** les deux sources de lumière (20, 22) sont réalisées chacune en tant que source de lumière présentant au moins un élément de LED (diode électroluminescente).

12. Feu selon la revendication 11, **caractérisé en ce que** chaque source de lumière (20, 22) est réalisée en tant que module de LED comprenant un grand nombre d'éléments de LED (54) agencés en forme de matrice ou de réseau.

13. Feu selon l'une des revendications 1 à 12, **caractérisé par** d'autres sources de lumière (50) qui sont disposées de manière à émettre leur lumière sous un angle sensiblement de 90° par rapport à l'axe préférentiel (30).

14. Feu selon la revendication 13, **caractérisé en ce que** lesdites autres sources de lumière (50) présentent chacune au moins un élément de LED.

15. Feu selon l'une des revendications 1 à 14, **caractérisé par** des sources de rayonnement supplémentaires (76) émettant un rayonnement électromagnétique dans le domaine des longueurs d'ondes non visibles, et qui sont disposées de façon à émettre. leur rayonnement essentiellement dans la direction de l'axe préférentiel (30), ces sources de rayonnement (76) pouvant être commandées de manière sélective pour une émission pulsée, intermittente et/ou continue de rayonnement.

16. Feu selon la revendication 15, **caractérisé en ce que** chaque source de rayonnement supplémentaire (76) est réalisée sous forme d'élément à LED, notamment en tant qu'élément à LED IR (infrarouge).
